# EUROPEAN PATENT APPLICATION

(11) **EP 4 703 198 A1**
(43) Date of publication of application: **04.03.2026**
(21) Application number: 24198029.1
(22) Date of filing: 02.09.2024
(51) Int. Cl.: B60N 2/28, B62B 7/14, B62B 9/20

(54) **CHILD SEAT**

(71) Applicant: Thule Sweden AB, 335 04 Hillerstorp (SE)
(72) Inventor: MEDIN, Mårten, 335 72 Hestra (SE); WILHELMSSON, Henrik, 332 31 Gislaved (SE)
(74) Representative: Wallentin, Lars

(57) **Abstract**

The child seat comprises a seat body (10), a carrying handle (20) configured to be grasped by a user for carrying the child seat (1), and a coupling portion (100) for coupling said child seat (1) on a supporting device (2), for example on a car seat base or to a child carrier frame, such as a stroller frame. The coupling portion (100) is configured transferable between a locking configuration in which the coupling portion (100) is locked to the supporting device (2) and an unlocking configuration in which it is unlocked and removable from the supporting device (2). The coupling portion (100) is transferable into the unlocking configuration by moving, for example sliding or shifting, the carrying handle (20) relative to the seat body (10) along a guiding path from a locking position to an unlocking position.

## Description

### FIELD

The present disclosure relates to a child seat.

### BACKGROUND

Child seats are known. Such child seats may comprise an interface configured to securely couple the child seat on a supporting device, for example a car seat base or a stroller frame. To uncouple the child seat form the supporting device, it is necessary that a user operates a release portion, for example a push button.

### SUMMARY

The present disclosure aims at improving child seats and in particular the way how a child seat can be uncoupled from a supporting device.

It is an object to provide an enhanced child seat with enhanced operability.

The object is solved by the configurations as presented in the claims, aspects and example configurations, examples and embodiments as described herein. Advantageous further formations may be gleaned from the dependent claims and from the below description.

According to an aspect, a child seat is provided.

The child seat comprises a seat body and a carrying handle configured to be grasped by a user for carrying the child seat.

The carrying handle is movable with respect to the seat body along a guiding path.

The carrying handle may be rotatable between a first rotational position and a second rotational position.

The carrying handle may be movable relative to the seat body to a third position along the guiding path.

The carrying handle may be only movable to the third position starting from the second rotational position.

The second rotational position may be an upright position of the carrying handle.

The first rotational position may be an inclined position, for example a forward inclined position or a rearward inclined position.

A movement of the carrying handle along the guiding path may at least be blocked when the carrying handle is in the first rotational position.

The child seat may further comprise a coupling portion for coupling the child seat on a supporting device.

The coupling portion may be configured transferable between a locking configuration in which the coupling portion is active, and an unlocking configuration in which the coupling portion is inactive.

The carrying handle may form an operating portion for transferring the coupling portion between the locking configuration and the unlocking configuration.

The coupling portion may be configured transferable between a locking configuration in which the coupling portion is locked to the supporting device, and an unlocking configuration in which it is unlocked and removable from the supporting device.

The coupling portion is transferable into said unlocking configuration by moving, for example sliding or shifting, the carrying handle relative to the seat body along a guiding path from a locking position to an unlocking position. The entire carrying handle may form an operating portion for transferring the coupling portion between the locking configuration and the unlocking configuration.

The locking position may be a lowermost position, and the unlocking position may be an uppermost position.

The supporting device may be a car seat base or a child carrier frame, such as a stroller frame.

The child seat may further comprise a connecting portion that connects the carrying handle with the seat body. The connecting portion may comprise a guiding mechanism defining the guiding path. The guiding mechanism may be a linear guide.

The guiding mechanism may comprise a stationary portion mounted on the seat body. The guiding mechanism may comprise a movable portion that supports the carrying handle. The movable portion may be movable relative to the stationary portion along the guiding path between a locking position and an unlocking position.

The movable portion and the stationary portion may be coupled by an engagement between one or more slots provided on one of the stationary portion and the movable portion, and a sliding portion provided on the other one of movable portion and the stationary portion and arranged and guided in the slot. At least one of the sliding portions may be snapped into the slot.

The one or more slots may be formed parallel to each other and/or may be formed straight.

The connecting portion may comprise a hinge joint configured to allow a rotation of the carrying handle relative to the seat body.

The hinge joint may comprise a first hinge portion, for example a hub portion, and a second hinge portion, for example a coupling section on the carrying handle. The first hinge portion and the second hinge portion may be rotatably coupled to each other.

The child seat may comprise a blocking mechanism for blocking a movement of the carrying handle along said guiding path towards the unlocking position and/or for arresting the carrying handle in the locking position.

The blocking mechanism may be transferrable between an active configuration in which the movement of the carrying handle to the unlocking position is blocked, and an inactive configuration in which the movement of the carrying handle to the unlocking position is allowed.

The blocking mechanism may be configured such that it can be transferred between the active configuration and the inactive configuration by rotating the carrying handle.

The blocking mechanism may comprise an engaging portion, for example a portion of a pin.

The engaging portion may be movable between a blocking position in which it positively locks the movable portion with the stationary portion, and a release position in which the movable portion is free to move relative to the stationary portion.

The engaging portion may be translatory movable in a moving direction parallel to a pivot axis defined by the hinge joint.

The engaging portion may be supported on the movable portion rotatable about its own axis.

The engaging portion may be supported on the movable portion such that a rotation of the engaging portion about its own axis moves the engaging portion in the moving direction relative to the movable portion.

The engaging portion may be spring loaded or biased towards the blocking position.

The blocking mechanism may further comprise a force receiving portion operatively coupled to the engaging portion, and a force application portion associated with the carrying handle, for example provided on a coupling section of the carrying handle.

The force receiving portion and the force application portion are configured such that the force application portion applies a force on the force receiving portion when the carrying handle is positioned in a predefined position or is positioned in a predefined angular range. The predefined position may be a position in which the carrying handle is in an upright position. In the upright position a gripping portion of the carrying handle and a pivot axis of the carrying handle may be arranged in an imaginary plane that extends vertically and in which the pivot axis extends.

The force receiving portion, and the engaging portion may be integrally formed in or provided on a locking member.

The force receiving portion may be a protrusion extending on the locking member in radial direction.

The force application portion may be a rib or protrusion on the coupling section.

The force application portion may extend in parallel with a rotation axis of the gripping handle. In addition or alternatively, the force application portion may extend into a channel formed on the movable portion. The force receiving portion may extend into the channel. The force application portion may be configured to push against the force receiving portion such that the force receiving portion rotates out of an at rest position corresponding to a locking position, to an unlocking position. The blocking mechanism may be configured such that the force receiving portion is rotatable in opposite directions out of the at rest position.

The force receiving portion may be biased towards the at rest position by an urging member.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a side view on a child seat according to an embodiment.
Fig. 2 shows a supporting device for supporting the child seat on a car seat.
Fig. 3 shows the child seat of Fig. 1 with its handle in a forward position.
Fig. 4 shows the child seat of Fig. 1 with its handle in a rearward position.
Fig. 5 shows a coupling portion of the child seat in a locking configuration.
Fig. 6 shows the coupling portion of Fig. 5 in an unlocking configuration.
Fig. 7 shows a perspective view from inside on the coupling portion of Figs. 5 and 6.
Fig. 8 shows further details of the coupling portion of Figs. 5 and 6.
Fig. 9 shows another coupling portion in a locking configuration.
Fig. 10 shows the coupling portion of Fig. 9 in unlocking configuration.
Fig. 11 shows an exploded view of elements of the coupling portion of Figs. 9 and 10.
Fig. 12 shows another exploded view from opposite side of the coupling portion of Figs. 9 and 10.
Fig. 13 shows a perspective view on a coupling section of a carrying handle.
Fig. 14 shows a perspective view on a connecting portion.
Fig. 15 shows a sectional view through the connecting portion of Fig. 14.
Fig. 16 shows an enlarged perspective view on a blocking mechanism of the connecting portion of Fig. 14 with the blocking mechanism in blocking configuration.
Fig. 17 shows an enlarged perspective view on the connecting portion with the blocking mechanism in a first unblocking configuration.
Fig. 18 shows an enlarged perspective view on the handle support unit with the blocking mechanism in a second unblocking configuration.
Fig. 19 shows the connecting portion in locking configuration.
Fig. 20 shows the connecting portion in unlocking configuration.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement or interlocked.

Some aspects of the present disclosure are defined below. These aspects may form exemplary embodiments of the present disclosure and may be combined with features mentioned in other portions of this specification.

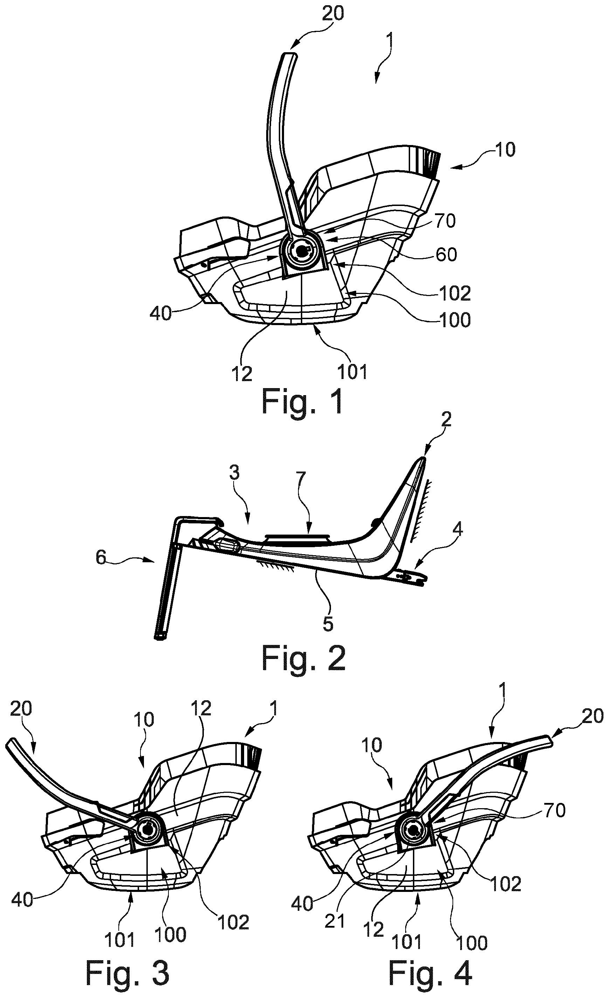

Fig. 1 shows a side view of a child seat 1 according to an embodiment.

The child seat 1 comprises a seat body 10 configured to accommodate a child. The seat body comprises a trough shape with two side portions 12.

Furthermore, the child seat 1 comprises a carrying handle 20 allowing a user to easily carry the child seat 1. The carrying handle 20 is connected to the seat body 10 by means of a connecting portion 40 also referred to as handle support unit. The carrying handle 20 comprises a coupling section 21 by means of which the carrying handle 20 is coupled to the seat body 10. The carrying handle 20 can be rotatably mounted to the seat body 10. The carrying handle 20 can be configured rotatable towards a forward position (see for example Fig. 3). The carrying handle 20 can be configured rotatable to a rearward position (see for example Fig. 4). The carrying handle 20 can be configured to be rotated into an upright position (see for example Fig. 1). In the upright position, a user can grasp the handle and lift the child seat 1. In the upright position, the carrying handle 20 may extend in a direction that corresponds to a lifting direction. The carrying handle 20 may comprise a U-shape. The coupling section 21 may be provided on each free end portion of the u-shaped carrying handle.

The child seat 1 comprises a coupling portion 100.

The coupling portion 100 is configured to couple the child seat 1 to a supporting device 2.

The supporting device 2 may be a car seat base 3 (see for example Fig. 2). The car seat base 3 may comprise a bottom portion 5 configured to be supported on a car seat by means of a fixation device 4, for example by means of an ISOFIX coupling. The supporting device 2 may comprise a seat coupling portion 7 configured to couple with the child seat 1, in particular configured to be engaged by the child seat 1. The seat coupling portion 7 is configured to be engaged by an engaging portion 104 on the child seat 1. The seat coupling portion 7 may be provided on an upper side of the supporting device 2. An exemplary supporting device 2 embodied as a car seat base 3 is shown in Fig. 2. Such car seat base 3 may comprise a load leg 6 at its front portion which is configured to support the front portion of the car seat base 3 on a footwell floor in front of the car seat on which the car seat base 3 is mounted.

The supporting device 2 may be a child carrier frame (not shown). The child carrier frame may be a frame of a stroller.

The coupling portion 100 may be configured to couple the child seat 1 to one of the supporting devices 2 described before. The coupling portion 100 may be configured to couple the child seat 1 selectively to one of two or more supporting devices. The coupling portion 100 may be configured to couple the child seat 1 selectively to one supporting device of two different supporting devices. The supporting devices may include the car seat base 3 and the child carrier frame.

In the embodiments shown in the drawings, the coupling portion 100 is configured to be selectively coupled to the car seat base 3 or to the child carrier frame, for example the frame of a stroller. It is, however, to be noted that according to a modification, the coupling portion 100 may be configured to be only mounted to a single predefined supporting device, for example only to a car seat base 3 or only to a child carrier frame.

The coupling portion 100 may comprise a first coupling section 101 configured to couple the child seat 1 to a car seat base 3.

The first coupling section 101 may comprise a force transfer member 103.

The force transfer member 103 is operatively coupled to an engaging portion 104. The force transfer member 103 can be configured to be coupled to the engaging portion 104 for engaging with the seat coupling portion 7 or may comprise such an engaging portion 104 in one end thereof.

The engaging portion 104 may be movable between an engaging position and a disengaging position. In the engaging position, the engaging portion 104 protrudes from the child seat 1 and can engage with the seat coupling portion 7. For example, the seat coupling portion 7 may be a protrusion protruding in upward direction from the car seat base 3. The child seat 1 may comprise a recess in its bottom portion for receiving the seat coupling portion 7. The engaging portion 104 may be configured to protrude into the recess, for example from a side wall of the recess, when it is in the engaging position. The engaging portion 104 may be configured to be retracted into the side wall and out of the recess when it is in the disengaging position. The engaging portion 104 may be biased towards the engaging position by an urging member such that any locking with the seat coupling portion 7 can only be released against an urging force applied on the engaging portion 104 by the urging member.

Corresponding to the engaging portion 104, the force transfer member 103 is movable between an engaging position corresponding to a position in which the engaging portion 104 is in the engaging position, and a disengaging position corresponding to a position in which the engaging portion 104 is in the disengaging position.

The force transfer member 103 may further comprise a force receiving portion 105 configured to receive an actuating force for moving the force transfer member 103 from the engaging position to the disengaging position.

The force receiving portion 105 is operatively coupled to the handle 20. For example the force receiving portion 105 may be operatively coupled to the handle 20 such that when a user applies a lifting force on the handle 20, the force receiving portion 105 is moved to the disengaging position.

The coupling portion 100 may comprise a second coupling section 102 configured to couple the child seat 1 to a child carrier frame, such as a stroller frame.

The second coupling section 102 may comprise a second engaging portion 111, also referred to as locking portion 111. The locking portion 111 may be configured as a hook. The locking portion 111 is configured to engage with a locking section on the child carrier frame.

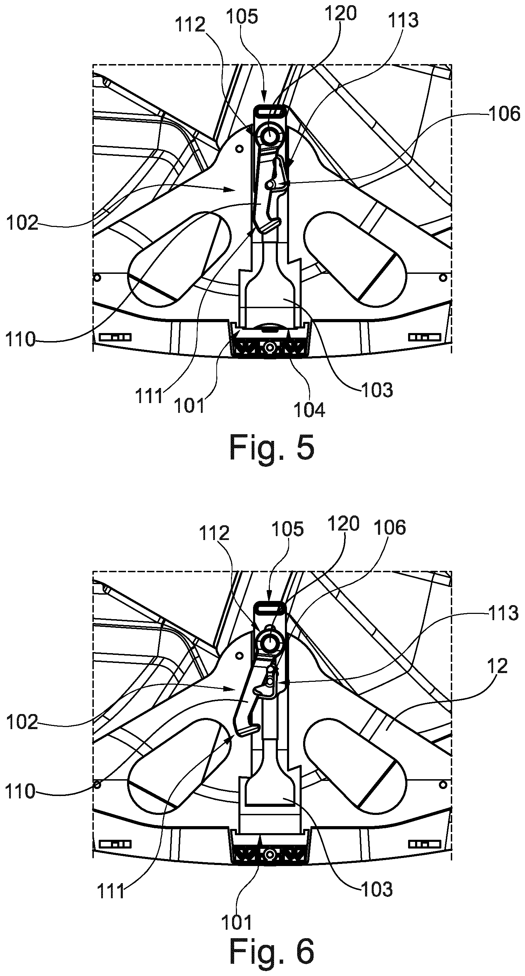

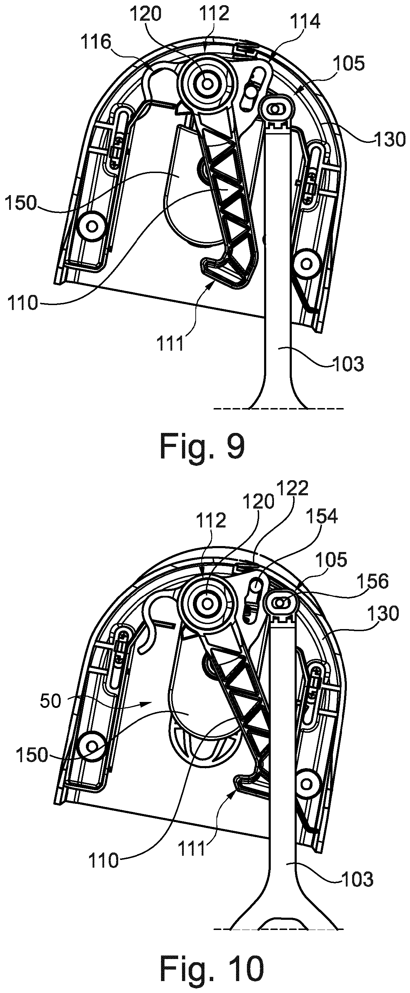

The locking portion 111 is movable between a locking position and an unlocking position. In the embodiments shown in the drawings, the locking portion 111 is rotatable between the locking position and the unlocking position. Figs. 5 and 10 show configurations in which the locking portion 111 is in the locking position. Figs. 6 and 9 show configurations in which the locking portion 111 is in the unlocking position.

The locking portion 111 can be configured to be rotatable between the locking position and the unlocking position. The locking portion 111 can be pivotable about a pivot member 120, for example a pivot pin or protrusion.

The locking portion 111 is operatively coupled to the carrying handle 20, in particular such that applying a lifting force, i.e. a force in vertical upward direction, on the carrying handle 20 and/or moving the entire carrying handle 20 relative to the seat body 10 moves the locking portion 111 to the unlocking position.

The locking portion 111 may be integrally formed with a locking member 110, for example molded, or may be fixedly attached to the locking member 110 to be integrally movable therewith. The locking member 110 may be an elongate member. The locking member 110 may be a lever. The locking portion 111 may be provided on one end portion of locking member 110. The locking portion 111 and/or the locking member 110 may be biased towards the locking position by an urging portion 116.

The locking member 110 may comprise a coupling portion 112, for example provided on an end opposite to the end of the locking member 110 on which the locking portion 111 is provided. The coupling portion 112 may comprise an opening for supporting the locking member on the pivot member 120. The pivot member 120 may be provided stationary on the seat body 10.

The second coupling section 102 may further comprise a force transfer mechanism configured to transfer a movement of the handle 20 into a movement of the locking portion 111.

The force transfer mechanism may comprise a slide guide with a guiding track 113 and a sliding member arranged in the guiding track 113. The guiding track 113 may be defined by a slot provided on the locking member 110. The sliding member may be a protrusion 106, 154. The protrusion 106, 154 is operatively coupled to the carrying handle 20. The protrusion 106 may be provided on the force transfer member 103. The protrusion 154 may be provided on a movable portion 150, for example on a sliding member 150, coupled to the carrying handle 20.

The guiding track 113 may be shaped such that a translatory movement of the carrying handle 20 and/or of the force transfer member 103 is transferred into a rotational movement of the locking member 110. A movement of the force transfer member 103 may move the engaging portion 104 and the locking portion 111 simultaneously towards the disengaging position and the unlocking position, respectively. It is noted that the engaging portion 104 and the second engaging portion or locking portion 111 may be biased towards the engaging position or locking position.

In the embodiments, the carrying handle 20 is supported on the seat body 10 translatory movable relative to the seat body 10 along a guiding path and rotatable relative to the seat body 10. The carrying handle 20 acts as an operating portion for the coupling portion, in particular for the first coupling section 101 and the second coupling section 102.

The child seat 1, in particular the connecting portion 40, may comprise a guiding mechanism 50 comprising a stationary portion 130 and a movable portion 140, 150, 160. The guiding mechanism 50 defines a guiding path along which the carrying handle 20 is movable. The guiding mechanism 50 may be a linear guide 60 or linear joint. The stationary portion 130 supports the movable portion 140, 150, 160 movable along the guiding path, for example between a lower position and an upper position. The stationary portion 130 comprises a fixation portion 132 configured to fixedly couple the stationary portion 130 to the seat body 10. The movable portion is associated with the carrying handle 20.

The guiding mechanism may comprise a slot 134, 136, 138 and a sliding portion 144, 146, 163, 165, 167 arranged in the slot 134, 136, 138. Two or more slots may be provided. The slots may be configured to extend in parallel with each other such that the movable portion 140 is only translated and not rotated upon moving along the stationary portion 130. The slots may be provided in the stationary portion 130. The sliding portion 144, 146, 163, 165, 167 or multiple sliding portions may be provided on the movable portion 140.

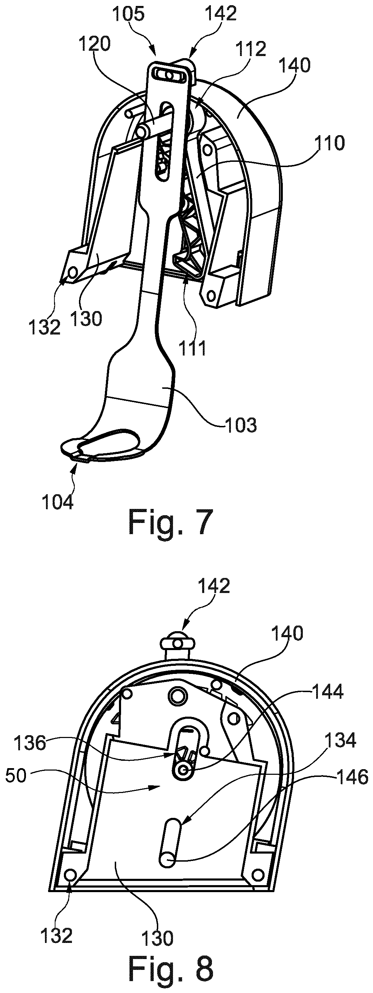

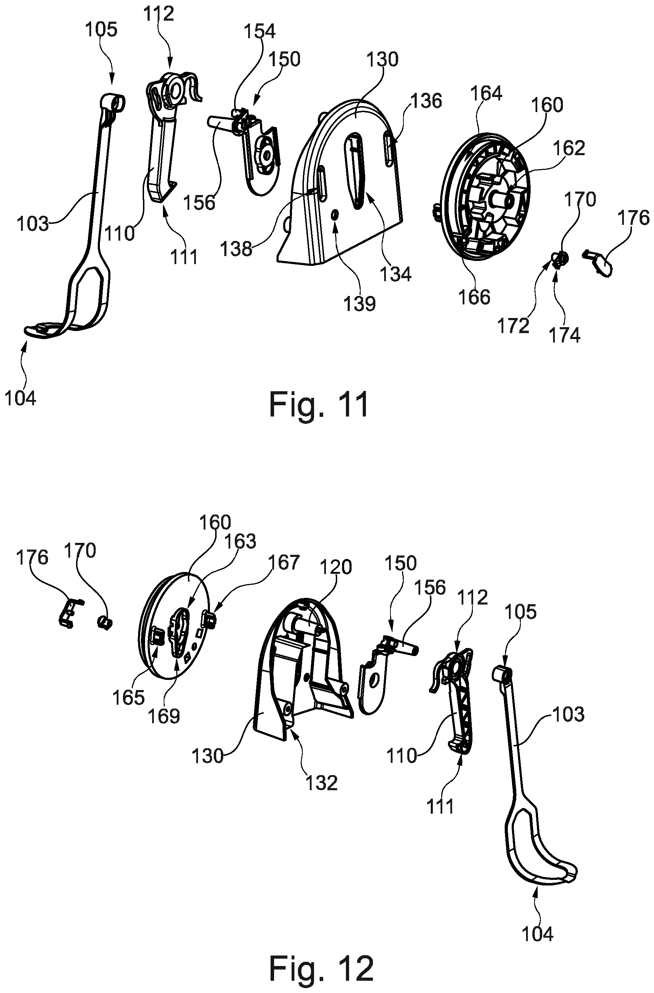

In the embodiment shown in Figs. 11 and 12, the stationary portion 130 comprises three slots 134, 136, 138. The movable portion 160 comprises three sliding portions 163, 165, 167. Respectively one sliding portion 163, 165, 167 of the sliding portions is accommodated in a corresponding slot of the three slots 134. In the embodiment shown in Fig. 8, two slots 134, 136 and two sliding portions 144, 146 are provided, wherein respectively one sliding portion is accommodated in one slot. The slots are straight and extend in parallel with each other. Accordingly, each movable portion 140, 150, 160 of the embodiments is linearly guided along a guiding path.

The connecting portion 40 further comprises a hinge mechanism 70 or hinge joint. The movable portion 140, 160 may be configured to rotatably support the carrying handle 20, in particular to rotatably support the coupling section 21 of the carrying handle 20 about a pivot axis. The coupling section 21 and the movable portion 140, 160 may together form the hinge mechanism 70. The coupling section 21 may comprise a supporting section 23, for example with a circular opening. The movable member 160 may comprise a circular supporting protrusion 162 configured to be received in the supporting section 23. Accordingly, the child seat 1 may be configured such that the pivot axis or the hinge joint, and thus the entire carrying handle 20, is movable along the guiding path.

The movable portion 140, 160 is operatively coupled to the force transfer member 103 and/or to the locking member 110. For example, the movable portion 140 may comprise a coupling section 142 coupled to the force receiving portion 105 (see Figs. 7 and 8). In another embodiment, the movable portion is coupled to the force receiving portion 105 of the force transfer member 103 via a coupling portion 156, and to a force receiving portion 114 of the locking member 110 via a coupling section 154, for example a protrusion. The coupling portion 156 and the coupling section 154 may be provided on the sliding member 150. The sliding member 150 may be fixedly coupled to the movable portion 160 so as to integrally move therewith. Accordingly, the sliding member 150 also forms a movable portion or the movable portion 160 and the sliding member 150 together form a movable portion.

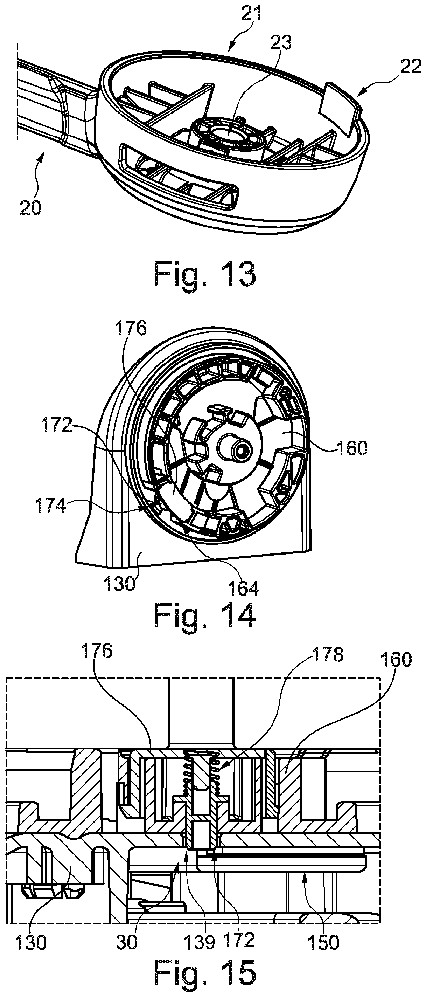

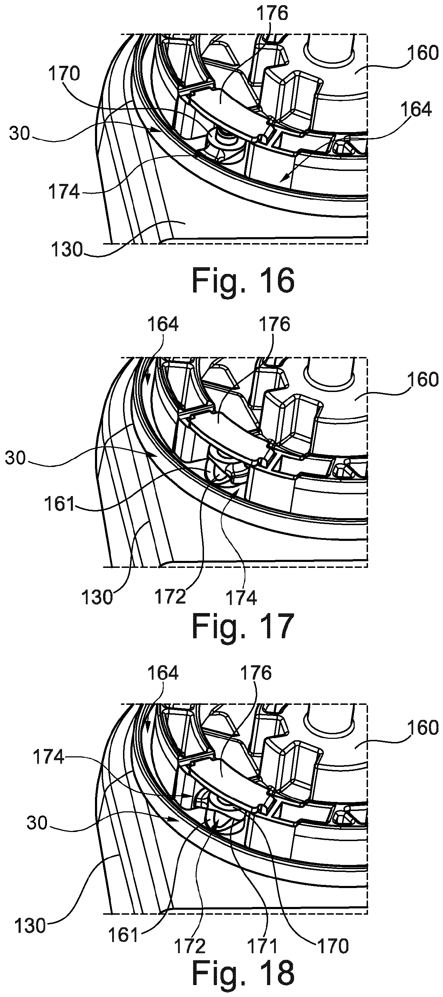

As shown in the embodiment in Figs. 16 to 20, the child seat 1, more precisely the connecting portion 40, may comprise a blocking mechanism 30 for blocking a movement of the carrying handle 20 and the movable portion 140, 150, 160 along the guiding path from the locking position to the unlocking position. The movable portion 140, 150, 160 may be biased towards the locking position. The locking position may be a lower position of the carrying handle. The unlocking position may be an upper position of the carrying handle. The blocking mechanism 30 may be configured to arrest the carrying handle in the locking position. The blocking mechanism 30 is transferrable between an active configuration in which the movement of the carrying handle 20 to the unlocking position is blocked, and an inactive configuration in which the movement of the carrying handle 20 to the unlocking position is allowed. Figs. 15 and 16 show a blocking mechanism 30 according to an embodiment in the active configuration. Figs. 17 and 18 show the blocking mechanism 30 in inactive configuration.

The blocking mechanism 30 comprises a locking member 170 provided on the movable portion 160. The locking member 170 comprises an engaging portion 172 and a force receiving portion 174. The locking member 170 may be a locking pin. The engaging portion 172 may be provided on a forward end of said locking member 170. The force receiving portion 174 may be provided at a rearward end portion of the locking member 170.

The engaging portion 172 may be configured to engage with a receiving portion 139, for example a recess or opening, provided on the stationary portion 130. The receiving portion 139 is shown in Figs. 11 and 15. When the engaging portion 172 is inserted in the receiving portion 139 (see Fig. 15), a movement of the movable portion 160 relative to the stationary portion 130 is blocked.

The locking member 170 is held on said movable portion 160 linearly movable along its longitudinal axis and rotatable about the longitudinal axis. The blocking mechanism 30 may be configured such that a rotation of the locking member 170 is transferred into a linear movement along the longitudinal axis. The locking member 170 may comprise a contact surface 171 extending about said longitudinal axis and configured to contact a supporting surface 161 that may be provided on the movable portion 160. The contact surface 171 and the supporting surface 161 are formed as sliding surfaces allowing said contact surface 171 to slide on the supporting surface 161.

The contact surface 171 is held in contact with the supporting surface 161 by an urging member 178. The urging member 178 may be supported on a flange portion on the locking member on one side and may be supported against a mounting bracket 176 fixed to the movable portion 160 at the other side.

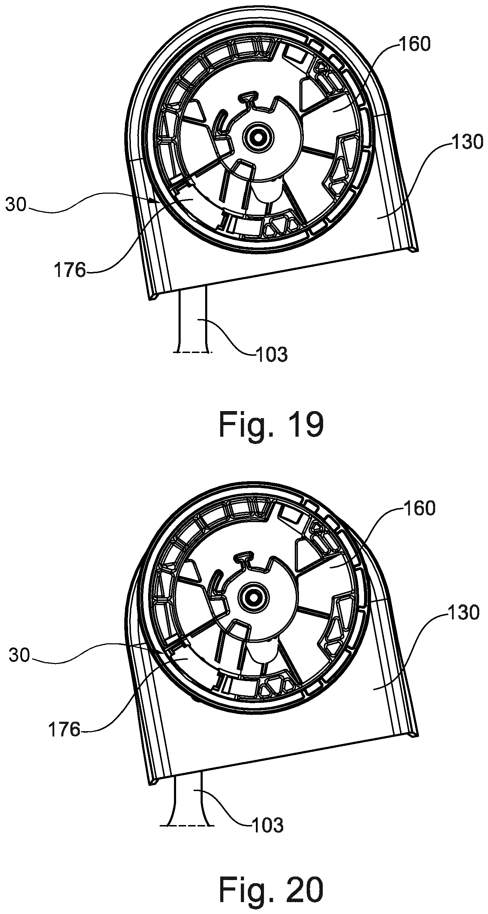

The contact surface 171 and the supporting surface 161 are formed such that a rotation of said locking member 170 leads to a displacement of said locking member 170 in the direction of its longitudinal axis. In the state of the locking member 170 shown in Fig. 16, the engaging portion 172 is inserted in the receiving portion 139 and in the states shown in Figs. 17 and 18, the locking member 170 is lifted and the engaging portion 172 is disengaged from the receiving portion 139. In the state as shown in Figs. 17 and 18, the movable portion 150, 160 is allowed to move from the locking position (Fig. 19) to the unlocking position (Fig. 20) in which the movable portion 150, 160 is displaced upwardly on the stationary portion 130. Accordingly, by applying a lifting force on the carrying handle 20, the movable portion 150, 160 and the carrying handle 20 coupled thereto are moved relative to the supporting portion 130 from the locking position to the unlocking position. Since the movable portion 150, 160 not only supports the carrying handle 20 but is also operatively coupled to the engaging portions 104, 111, the engaging portions 104, 111 are moved towards the unlocking position when the movable portion 150, 160 and the carrying handle 20 are moved to the unlocking position along the guiding path.

The child seat 1 may further comprise a force application portion 22 associated with the carrying handle 20. The force application portion 22 may be provided on the coupling section 21 of the carrying handle 20 (see Fig. 13). The force receiving portion 174 and the force application portion 22 may be configured such that the force application portion 22 applies a force on the force receiving portion 174 when the carrying handle 20 is positioned in a predefined position or is positioned in a predefined angular range. The predefined position may be a position in which the carrying handle 20 is in an upright position. In the upright position, a gripping portion of the carrying handle 20 and a pivot axis of the carrying handle may be arranged in an imaginary plane that extends vertically and in which the pivot axis extends. The force receiving portion 174 and the engaging portion 172 may be integrally formed in or provided on a locking member 170.

As shown in the embodiment, the force receiving portion 174 may be a protrusion extending on said locking member 170 in radial direction.

The force application portion 22 may be a rib or protrusion on the coupling section 21. The force application portion 22 may extend in parallel with a rotation axis of the gripping handle 20. The force application portion 22 may extend into a channel 164 formed on the movable portion 160. The force receiving portion 174 may extend into the channel 164. The force application portion 22 may be configured to push against the force receiving portion such that the force receiving portion 174 rotates out of an at rest position corresponding to a locking position, to an unlocking position. The blocking mechanism 30 may be configured such that the force receiving portion 174 is rotatable in opposite direction out of the at rest position for moving to the unlocking position.

The receiving portion may be biased towards the at rest position by an urging member 178.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.
Aspect A1: Child seat (1), comprising
   a seat body (10),
   a carrying handle (20) configured to be grasped by a user for carrying the child seat (1),
   wherein said carrying handle (20) is movable with respect to said seat body along a guiding path.
Aspect A2: Child seat (1) according to aspect 1,
   wherein said carrying handle (20) is rotatable between a first rotational position and a second rotational position, and
   wherein said carrying handle (20) is movable relative to said seat body (10) to a third position along said guiding path.
Aspect A3: Child seat (1) according to aspect 2,
   wherein said carrying handle (20) is only movable to said third position starting from said second rotational position.
Aspect A4: Child seat (1) according to aspect 2 or aspect 3,
   wherein said second rotational position is an upright position of said carrying handle (20).
Aspect A5: Child seat (1) according to one of aspects 2 to 4, wherein said first rotational position is an inclined position, for example a forward inclined position or a rearward inclined position.
Aspect A6: Child seat (1) according to one of aspects 2 to 5, wherein a movement of said carrying handle (20) along said guiding path is at least blocked when said carrying handle (20) is in said first rotational position.
Aspect A7: Child seat (1) according to one of the preceding aspects, further comprising
   a coupling portion (100) for coupling said child seat (1) on a supporting device (2),
   wherein said coupling portion (100) is configured transferable between a locking configuration in which said coupling portion (100) is active, and an unlocking configuration in which said coupling portion (100) is inactive,
   wherein said entire carrying handle (20) forms an operating portion for transferring said coupling portion (100) between said locking configuration and said unlocking configuration.
Aspect A8: Child seat (1) according to aspect A7,
   wherein said coupling portion (100) is transferable into said unlocking configuration by moving said carrying handle (20) relative to said seat body (10) along said guiding path from a locking position to an unlocking position,
   wherein said locking position may be a lowermost position and said unlocking position may be an uppermost position.
Aspect A9: Child seat (1) according to aspect A7 or A8,
   wherein when said coupling portion (100) is active or in said locking configuration, said coupling portion (100) is in a state in which it is engaged or locked to said supporting device (2) when said child seat is mounted on said supporting device (2), and
   wherein when said coupling portion (100) is inactive or in said unlocking position, said coupling portion (100) is disengaged or unlocked and removable from said supporting device (2) when said child seat is mounted on said supporting device (2).
Aspect A10: Child seat (1) according to one of the preceding aspects A7 to A9, wherein said coupling portion (100) is transferable into said unlocking configuration by sliding or shifting said carrying handle (20) relative to said seat body (10).
Aspect A11: Child seat (1) according one of the preceding aspects, further comprising
   a connecting portion (40) that connects said carrying handle (20) with said seat body (10),
   wherein said connecting portion (40) comprises a guiding mechanism (50) defining said guiding path, wherein said guiding mechanism (50) may be a linear guide.
Aspect A12: Child seat (1) according to claim 2,
   wherein said guiding mechanism (50) comprises a stationary portion (130) mounted on the seat body (10), and
   a movable portion (140, 150, 160) supporting said carrying handle (20),
   wherein said movable portion (140, 150, 160) is movable relative to the stationary portion (130) along said guiding path, in particular between a locking position and an unlocking position.
Aspect A13: Child seat (1) according to aspect A12,
   wherein said movable portion (140, 150, 160) and said stationary portion (130) are coupled by an engagement between one or more slots (134, 136, 138) provided on one of the stationary portion (130) and the movable portion (140, 150, 160), and a sliding portion (146, 144, 163, 165, 167) provided on the other one of movable portion (140, 150, 160) and the stationary portion (130) and arranged and guided in the slot (134, 136, 138).
Aspect A14: Child seat (1) according to aspect A13,
   wherein said one or more slots (134, 136, 138) may be formed parallel to each other and/or may be formed straight.
Aspect A15: Child seat (1) according to one of aspects A11 to A14,
   wherein said connecting portion (40) further comprises a hinge joint (60) configured to allow a rotation of said carrying handle (20) relative to said seat body (10).
Aspect A16: Child seat (1) according to aspect A15,
   wherein said hinge joint (60) comprises a first hinge portion, for example a hub portion (160), and a second hinge portion, for example a coupling section (21) on said carrying handle (20),
   wherein said first hinge portion and said second hinge portion are rotatably coupled to each other.
Aspect A17: Child seat (1) according to one of the preceding aspects, further comprising
   a blocking mechanism (30) for blocking a movement of said carrying handle (20) along said guiding path,
   wherein said blocking mechanism (30) is transferrable between an active configuration in which said movement of said carrying handle (20) along said guiding path is blocked, and an inactive configuration in which said movement of said carrying handle (20) along the guiding path is allowed,
   wherein said blocking mechanism (30) is configured such that it is transferred between said active configuration and said inactive configuration by rotating said carrying handle (20).
Aspect A18: Child seat (1) according to one of the preceding aspects A1 to A16, further comprising
   a blocking mechanism (30) for blocking a movement of said carrying handle (20) along said guiding path, for example towards said third position or towards said unlocking position, and/or for arresting said carrying handle (20) in said locking position,
   wherein said blocking mechanism (30) is transferrable between an active configuration in which said movement of said carrying handle (20) to the unlocking position is blocked, and an inactive configuration in which said movement of said carrying handle (20) to the unlocking position is allowed,
   wherein said blocking mechanism (30) is configured such that it is transferred between said active configuration and said inactive configuration by rotating said carrying handle (20).
Aspect A19: Child seat (1) according to aspect 17 or aspect 18 in combination with one of the preceding aspects comprising said guiding mechanism (50) with said movable portion and said stationary portion,
   wherein said blocking mechanism (30) comprises an engaging portion (172), for example a portion of a pin,
   wherein said engaging portion (172) is movable between a blocking position in which it positively locks said movable portion (140, 150, 160) with said stationary portion (130), and a release position in which said movable portion (140, 150, 160) is free to move relative to said stationary portion (130).
Aspect A20: Child seat (1) according to aspect A19,
   wherein said engaging portion (172) is translatory movable in a moving direction parallel to a pivot axis defined by said hinge joint (60).
Aspect A21: Child seat (1) according to aspect A19 or A20,
   wherein said engaging portion (172) may be supported on said movable portion (160) rotatable about its own axis.
Aspect A22: Child seat (1) according to aspect A19, A20 or A21,
   wherein said engaging portion (172) may be supported on said movable portion (160) such that a rotation of said engaging portion (172) about its own axis moves said engaging portion (172) in said moving direction relative to said movable portion (160).
Aspect A23: Child seat (1) according to one of aspects A19 to A22,
   wherein said engaging portion (172) may be spring loaded towards said blocking position.
Aspect A24: Child seat (1) according to one of aspects A17 to A22, wherein said blocking mechanism (30) further comprises
   a force receiving portion (174) operatively coupled to said engaging portion (172), and
   a force application portion (22) associated with the carrying handle (20), for example provided on a coupling section (21) of said carrying handle (20).
Aspect A25: Child seat (1) according to aspect A24,
   wherein said force receiving portion (174) and said force application portion (22) are configured such that said force application portion (22) applies a force on said force receiving portion (174) when said carrying handle (20) is positioned in a predefined position or is positioned in a predefined angular range.
Aspect A26: Child seat (1) according to aspect A25,
   wherein said predefined position is a position in which said carrying handle (20) is in an upright position, wherein in said upright position a gripping portion of said carrying handle (20) and a pivot axis of said carrying handle may be arranged in an imaginary plane that extends vertically and in which said pivot axis extends.
Aspect A27: Child seat (1) according to one of aspects A24 to A26,
   wherein said force receiving portion (174) and said engaging portion (172) are integrally formed in or provided on a locking member (170).
Aspect A28: Child seat (1) according to one of aspects A24 to A27,
   wherein said force receiving portion (174) may be a protrusion extending on said locking member (170) in radial direction.
Aspect A29: Child seat (1) according to one of aspects A24 to A28,
   wherein said force application portion (22) may be a rib or protrusion on said coupling section (21).
Aspect A30: Child seat (1) according to one of aspects A24 to A29,
   wherein said force application portion (22) extends in parallel with a rotation axis of said gripping handle (20).
Aspect A31: Child seat (1) according to one of aspects A24 to A30,
   wherein said force application portion (22) extends into a channel (164) formed on said movable portion (160),
   wherein said force receiving portion (174) extends into said channel (164), and
   wherein said force application portion (22) is configured to push against said force receiving portion (174) such that said force receiving portion (174) rotates out of an at rest position corresponding to a locking position, to an unlocking position.
Aspect A32: Child seat (1) according to aspect A31,
   wherein said blocking mechanism (30) may be configured such that said force receiving portion (174) is rotatable in opposite directions out of said at rest position.
Aspect A33: Child seat (1) according to aspect A31 or aspect A32,
   wherein said force receiving portion (174) is biased towards said at rest position by an urging member (178).
Aspect A34: Child carrying system comprising
   a child seat (1) according to one of the preceding aspects, and
   a supporting device,
   wherein said supporting device may be a car seat base or a child carrier frame, such as a stroller frame.

**REFERENCE SIGNS**

| | | | |
|---|---|---|---|
| 1 | Child seat | 114 | Force receiving portion |
| 2 | Supporting device | 116 | Urging portion |
| 3 | Car seat base | 120 | Pivot member |
| 4 | Fixation device/ISOFIX coupling | 130 | Stationary portion |
| 5 | Bottom portion | 132 | Fixation portion |
| 6 | Load leg | 134 | Slot |
| 7 | Seat coupling portion | 136 | Slot |
| 10 | Seat body | 138 | Slot |
| 12 | Side portion | 139 | Receiving portion |
| 20 | Carrying handle | 140 | Movable portion |
| 21 | Coupling section | 142 | Coupling section |
| 22 | Operating section | 144 | Sliding portion |
| 23 | Supporting section | 146 | Sliding portion |
| 30 | Blocking mechanism | 150 | Movable portion/sliding member |
| 40 | Connecting portion | 154 | Protrusion |
| 50 | Guiding mechanism | 156 | Coupling portion |
| 60 | Linear joint/linear guide | 160 | Movable portion |
| 70 | Hinge joint/hinge mechanism | 162 | Supporting protrusion |
| 100 | Coupling portion | 163 | Sliding portion |
| 101 | First coupling section | 165 | Sliding portion |
| 102 | Second coupling section | 167 | Sliding portion |
| 103 | Force transfer member | 150 | Sliding member |
| 104 | Engaging portion | 154 | Protrusion |
| 105 | Force receiving portion | 156 | Coupling portion |
| 106 | Protrusion | 170 | Locking member |
| 110 | Locking member | 171 | Contact surface |
| 111 | Second engaging portion/locking portion | 172 | Engaging portion |
| | | 174 | Force receiving portion |
| 112 | Coupling portion | 176 | Mounting bracket |
| 113 | Guiding track | 178 | Urging member |

## Claims

1. Child seat (1), comprising
a seat body (10),
a carrying handle (20) configured to be grasped by a user for carrying the child seat (1), wherein said carrying handle (20) is movable with respect to said seat body along a guiding path.

2. Child seat (1) according to claim 1,
wherein said carrying handle (20) is rotatable between a first rotational position and a second rotational position, and
wherein said carrying handle (20) is movable relative to said seat body (10) to a third position along said guiding path,
wherein said carrying handle (20) may be configured to be only movable to said third position starting from said second rotational position,
and/or
wherein said second rotational position is an upright position of said carrying handle (20),
and/or
wherein said first rotational position is an inclined position, for example a forward inclined position or a rearward inclined position.
and/or
wherein a movement of said carrying handle (20) along said guiding path is at least blocked when said carrying handle (20) is in said first rotational position.

3. Child seat (1) according to one of the preceding claims, further comprising
a coupling portion (100) for coupling said child seat (1) on a supporting device (2),
wherein said coupling portion (100) is configured transferable between a locking configuration in which said coupling portion (100) is active, and an unlocking configuration in which said coupling portion (100) is inactive,
wherein said entire carrying handle (20) forms an operating portion for transferring said coupling portion (100) between said locking configuration and said unlocking configuration.

4. Child seat (1) according to claim 1 or claim 2, further comprising
a coupling portion (100) for coupling said child seat (1) on a supporting device (2), for example on a car seat base or to a child carrier frame, such as a stroller frame,
wherein said coupling portion (100) is configured transferable between a locking configuration in which said coupling portion (100) is locked to said supporting device (2) and an unlocking configuration in which it is unlocked and removable from said supporting device (2), and
wherein said coupling portion (100) is transferable into said unlocking configuration by moving, for example sliding or shifting, said carrying handle (20) relative to said seat body (10) along said guiding path from a locking position to an unlocking position.

5. Child seat (1) according to claim 4, further comprising
a connecting portion (40) that connects said carrying handle (20) with said seat body (10),
wherein said connecting portion (40) comprises a guiding mechanism (50) defining said guiding path, wherein said guiding mechanism (50) may be a linear guide.

6. Child seat (1) according to claim 5,
wherein said guiding mechanism (50) comprises a stationary portion (130) mounted on the seat body (10), and
a movable portion (140, 150, 160) supporting said carrying handle (20), wherein said movable portion (140, 150, 160) is movable relative to the stationary portion (130) along said guiding path between a locking position and an unlocking position.

7. Child seat (1) according to claim 6,
wherein said movable portion (140, 150, 160) and said stationary portion (130) are coupled by an engagement between one or more slots (134, 136, 138) provided on one of the stationary portion (130) and the movable portion (140, 150, 160), and a sliding portion (146, 144, 163, 165, 167) provided on the other one of movable portion (140, 150, 160) and the stationary portion (130) and arranged and guided in the slot (134, 136, 138),
wherein said one or more slots (134, 136, 138) may be formed parallel to each other and/or may be formed straight.

8. Child seat (1) according to one of claims 5 to 7,
wherein said connecting portion (40) further comprises a hinge joint (60) configured to allow a rotation of said carrying handle (20) relative to said seat body (10).

9. Child seat (1) according to claim 7,
wherein said hinge joint (60) comprises a first hinge portion, for example a hub portion (160), and a second hinge portion, for example a coupling section (21) on said carrying handle (20), wherein said first hinge portion and said second hinge portion are rotatably coupled to each other.

10. Child seat (1) according to one of the preceding claims, further comprising
a blocking mechanism (30) for blocking a movemenbt of said carrying handle (20) along said guiding path.

11. Child seat (1) according to one of claims 4 to 9, further comprising
a blocking mechanism (30) for blocking a movement of said carrying handle (20) along said guiding path towards said unlocking position and/or for arresting said carrying handle (20) in said locking position,
wherein said blocking mechanism (30) is transferrable between an active configuration in which said movement of said carrying handle (20) to the unlocking position is blocked, and an inactive configuration in which said movement of said carrying handle (20) to the unlocking position is allowed,
wherein said blocking mechanism (30) is configured such that it is transferred between said active configuration and said inactive configuration by rotating said carrying handle (20).

12. Child seat (1) according to claim 11 in combination with claim 6,
wherein said blocking mechanism (30) comprises an engaging portion (172), for example a portion of a pin,
wherein said engaging portion (172) is movable between a blocking position in which it positively locks said movable portion (140, 150, 160) with said stationary portion (130), and a release position in which said movable portion (140, 150, 160) is free to move relative to said stationary portion (130).

13. Child seat (1) according to claim 12,
wherein said engaging portion (172) is translatory movable in a moving direction parallel to a pivot axis defined by said hinge joint (60),
and/or
wherein said engaging portion (172) may be supported on said movable portion (160) rotatable about its own axis,
and/or
wherein said engaging portion (172) may be supported on said movable portion (160) such that a rotation of said engaging portion (172) about its own axis moves said engaging portion (172) in said moving direction relative to said movable portion (160),
and/or
wherein said engaging portion (172) may be spring loaded towards the blocking position.

14. Child seat (1) according to one of claims 12 and 13, wherein said blocking mechanism (30) further comprises
a force receiving portion (174) operatively coupled to said engaging portion (172), and
a force application portion (22) associated with the carrying handle (20), for example provided on a coupling section (21) of said carrying handle (20),
wherein said force receiving portion (174) and said force application portion (22) are configured such that said force application portion (22) applies a force on said force receiving portion (174) when said carrying handle (20) is positioned in a predefined position or is positioned in a predefined angular range, wherein said predefined position may be a position in which said carrying handle (20) is in an upright position, wherein in said upright position a gripping portion of said carrying handle (20) and a pivot axis of said carrying handle may be arranged in an imaginary plane that extends vertically and in which said pivot axis extends,
wherein said force receiving portion (174) and said engaging portion (172) may be integrally formed in or provided on a locking member (170),
wherein said force receiving portion (174) may be a protrusion extending on said locking member (170) in radial direction,
wherein said force application portion (22) may be a rib or protrusion on said coupling section (21),
wherein said force application portion (22) may extend in parallel with a rotation axis of said gripping handle (20) and/or may extend into a channel (164) formed on said movable portion (160), wherein said force receiving portion (174) may extend into said channel (164), wherein said force application portion (22) is configured to push against said force receiving portion (174) such that said force receiving portion (174) rotates out of an at rest position corresponding to a locking position, to an unlocking position, wherein said blocking mechanism (30) may be configured such that said force receiving portion (174) is rotatable in opposite directions out of said at rest position,
wherein said force receiving portion (174) may be biased towards said at rest position by an urging member (178).
